(19) Europäisches Patentamt
European Patent Office
Office européen des brevets

(11) **EP 2 048 907 B1**

(12) **EUROPEAN PATENT SPECIFICATION**

(45) Date of publication and mention
of the grant of the patent:
**30.06.2010 Bulletin 2010/26**

(51) Int Cl.:
***H04W 36/30*** (2009.01)

(21) Application number: **08158997.0**

(22) Date of filing: **25.06.2008**

(54) **Method of determining hysteresis range, handover triggering method, and mobile station for performing the method**

Verfahren zur Bestimmung des Hysteresebereichs, Übergabeauslöseverfahren und mobile Station zur Durchführung dieses Verfahrens

Procédé pour déterminer la gamme d'hystérèse, procédé de déclenchement de transfert, et station mobile pour effectuer le procédé

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **12.10.2007 KR 20070103012**

(43) Date of publication of application:
**15.04.2009 Bulletin 2009/16**

(73) Proprietors:
• **Electronics and Telecommunications Research Institute**
**Yuseong-gu**
**Daejon 305-350 (KR)**
• **KTFreetel Co., Ltd.**
**Songpa-gu**
**Seoul 138-240 (KR)**

(72) Inventors:
• **Kim, Won Ik**
**305-770, Deajeon (KR)**

• **Baek, Seung-Kwon**
**305-330, Daejeon (KR)**
• **Kim, Hyung-Sub**
**138-794, Seoul (KR)**
• **Shin, Yeon Seung**
**305-772, Daejeon (KR)**

(74) Representative: **Betten & Resch**
**Patentanwälte**
**Theatinerstrasse 8**
**80333 München (DE)**

(56) References cited:
EP-A- 1 091 612         WO-A-99/34633
DE-A1- 19 510 256       US-A1- 2004 267 928

• **WON-IK KIM ET AL: "Ping-Pong Avoidance Algorithm for Vertical Handover in Wireless Overlay Networks" VEHICULAR TECHNOLOGY CONFERENCE, 2007. VTC-2007 FALL. 2007 IEEE 66TH, IEEE, PI, 1 September 2007 (2007-09-01), pages 1509-1512, XP031147659 ISBN: 978-1-4244-0263-2**

EP 2 048 907 B1

**Description**

**BACKGROUND OF THE INVENTION**

**(a) Field of the Invention**

The present invention relates to a method of determining a hysteresis range, a handover triggering method, and a mobile station for performing the method.

The present invention is supported by the IT R&D program of MIC/IITA 2005-S-404-23, Research and development on 3G long-term evolution access system.

**(b) Description of the Related Art**

A basic purpose of handover is to always connect a mobile station with a base station, which provides the best signal quality, in order to provide a service without intermittence to a moving user. Therefore, there have been various handover methods that connect a mobile station with a base station providing the best signal quality,

First, there is the following method. In this method, a mobile station performs handover to a cell, which provides the best signal intensity, without additional criteria. This method causes a problem that unnecessary handover occurs while the mobile station moves along a path, Particularly, if handover is performed whenever a pattern where signal intensity is suddenly increased or decreased may occur in an irregular wireless environment, a ping-pong effect where the performance of a system deteriorates may occur.

A fixed hysteresis application handover method has been proposed in the related art in order to solve this problem.

In the case of the fixed hysteresis application handover method, the signal intensity of a serving cell is compared with the signal intensities of adjacent cells by a fixed hysteresis range FH and a timer value, and handover is performed when the signal intensities of the adjacent cells are significantly higher than the signal intensity of the serving cell. That is, when detecting the signal intensity $RSS_{Neigh}$ of an adjacent cell, which has the highest signal intensity level, from an adjacent cell in a coverage region as represented by the following Equation 1, the mobile station confirms whether the signal intensity $RSS_{Neigh}$ is higher than the sum of the signal intensity $RSS_{serv}$ detected from the serving cell and the fixed hysteresis range FH. If the signal intensity $RSS_{Neigh}$ is higher than the sum of the signal intensity $RSS_{serv}$ detected from the serving cell and the fixed hysteresis range FH, handover is performed.

The following Equation 1 represents a handover reporting event formula corresponding to the fixed hysteresis application handover.

$$\text{Equation 1}$$

$$RSS_{serv} < RSS_{Neigh} - FH$$

Meanwhile, the fixed hysteresis application handover method has an advantage of reducing potential unnecessary handover, which is performed using a value lower than the hysteresis range on the signal quality, to some extent. However, there is the following problem: when the signal intensity $RSS_{serv}$ of the signal received from the serving cell is sufficiently high or the signal intensities of the adjacent cells are significantly high (when $Rss_{serv} < RSS_{Neigh} - FH$ is still available), unnecessary handover is performed. Further, when the signal intensity of the serving cell is very low or the signal intensities of the adjacent cells do not meet the handover reporting event formula ($RSS_{serv} < RSS_{Neigh} - FH$), handover triggering is not quickly performed. For this reason, there is a problem in that the probability of handover failure is increased.

A variable hysteresis application handover method has been proposed in the related art in order to overcome the drawback of the fixed hysteresis application handover. The variable hysteresis application handover method is a method that reduces the probability of handover by increasing a hysteresis range when the signal intensity of a serving cell is high, and increases the probability of handover by decreasing the hysteresis range when the signal intensity of a serving cell is low. The method uses a variable hysteresis range depending on the signal intensity of the serving cell.

A handover reporting event formula corresponding to the variable hysteresis application handover may be represented by the following Equation 2.

## Equation 2

$$RSS_{serv} < RSS_{Neigh} - VH$$

$$VH = RSS_{serv} - \mu$$

According to Equation 2, a variable hysteresis range VH is represented by the difference between the signal intensity $RSS_{serv}$ of the current serving cell and the fixed handover expectation value $\mu$. Accordingly, if the signal intensity $RSS_{serv}$ of the serving cell is increased, the variable hysteresis range VH is also increased. If the signal intensity $RSS_{serv}$ of the serving cell is decreased, the variable hysteresis range VH is decreased.

Meanwhile, in the case of the variable hysteresis application handover method, if the signal intensity of the serving cell is high, the hysteresis range is increased, which makes it possible to reduce the probability of unnecessary handover. Further, if the signal intensity of the serving cell is low, the hysteresis range is decreased, which makes it possible to quickly perform handover. However, the probability of handover with respect to the signal intensity given in the serving cell depends on the selection of the handover expectation value $\mu$. Further, when the signal intensity of the serving cell is low or the signal intensities of the adjacent cells are low, the variable hysteresis range is significantly decreased. For this reason, there is a drawback in that unnecessary handover occurs.

Patent Application US 200410267928 discloses method and apparatus for facilitating base station selection/ handover by a user terminal in a distributed (e.g., cellular-type) wireless communication system. Accordingly, hysteresis is adaptively determined as a function of the variance of receive signal strength fluctuations. In turn, an adaptive hysteresis factor can be obtained and used for a subsequent handover decision, for example, based on a cost function that takes into account the hysteresis. In accordance with another aspect, base station selection depends on a number of criteria, such as received signal strength, base station load, and estimated distance between a receiving user terminal and one or more base stations.

In non-patent document "PingPong Avoidance Algorithm for Vertical Handover in Wireless Overlay Networks" in IEEE 66th VTC, 2007-09-01, Won-lk Kim et al. propose a ping-pong avoidance algorithm capable of effectively alleviating the unnecessary vertical handovers between 3G cellular and WLAN hotspot. The proposed algorithm determine the appropriate time at which a terminal should initiate a handover. It can be classified into two major schemes: one is designed to separate the single vertical handover threshold; the other to estimate the transition of the beacon signal strengths received by the terminal from WLAN hotspots on the basis of the least square approach. A hyptereis range with fixed values is provided.

## SUMMARY OF THE INVENTION

The present invention has been made in an effort to provide a method of determining a hysteresis range of a mobile station having advantages of preventing the occurrence of unnecessary handover, and a handover triggering method therefor.

An exemplary embodiment of the present invention provides a method of determining a hysteresis range of a mobile station for performing handover triggering.

The method includes obtaining signal intensities of signals that are received from a serving cell and adjacent cells during a collection period, deducing a slope of linearized signal intensity of each of the serving cell and the adjacent cells by using the signal intensities, and determining hysteresis ranges corresponding to the adjacent cells by using the slope.

Further, another embodiment of the present invention provides a handover triggering method of a mobile station.

The handover triggering method includes obtaining signal intensities of signals that are received from a plurality of cells including a serving cell and at least one adjacent cell during a collection period, deducing a slope of linearized signal intensity of each of the plurality of cells by using the signal intensities, determining at least one hysteresis range corresponding to the at least one adjacent cell by using the difference between the slope corresponding to the at least one adjacent cell and the slope corresponding to the serving cell, determining whether the handover triggering is to be performed or not by using the hysteresis range, and transmitting a message, which includes information about a target cell to be an object of handover, to the serving cell when the handover triggering is determined.

Furthermore, yet another embodiment of the present invention provides a mobile station.

The mobile station include a signal collecting unit obtaining signal intensities of signals that are received from a plurality of cells including a serving cell and at least one adjacent cell during a collection period, a signal intensity pattern analyzing unit deducing approximately linearized signal intensities of the plurality of cells and the slopes of the approximately linearized signal intensities by using the signal intensities obtained during the collection period, and a handover triggering determining unit that determines at least one hysteresis range corresponding to the at least one adjacent cell by using the slopes, selects a target cell by using the at least one hysteresis range, and determines whether the handover triggering is to be performed or not.

According to the present invention, when determining the hysteresis ranges by using the slopes of the linearized signal intensities of the adjacent cells, the mobile station is apt to perform handover to a cell of which signal quality is most rapidly increased among the adjacent cells. Therefore, it is possible to obtain an advantage of reducing unnecessary handover.

## BRIEF DESCRIPTION OF THE DRAWINGS

FIG. 1 is a diagram showing the configuration of a mobile station according to an exemplary embodiment of the present invention.

FIG. 2 is a flowchart illustrating a handover triggering method according to an exemplary embodiment of the present invention.

FIG. 3 is a view showing an example of a method of determining a relative hysteresis range according to an exemplary embodiment of the present invention.

## DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. In addition, the terms "-er", "-or", and "module" described in the specification mean units for processing at least one function and operation, and can be implemented by hardware components or software components, and combinations thereof.

In this specification, a mobile station (MS) may represent a terminal, a mobile terminal (MT), a subscriber station (SS), a portable subscriber station (PSS), user equipment (UE), an access terminal (AT), and the like. Further, the mobile station may have the entire or partial function of the terminal, the mobile terminal, the subscriber station, the portable subscriber station, the user equipment, the access terminal, and the like.

In this specification, a base station (BS) may represent an access point (AP), a radio access station (RAS), a node B, an eNB (evolved Node-B), a base transceiver station (BTS), a mobile multihop relay (MMR)-BS, and the like. Further, the base station may have the entire or partial function of the access point, the radio access station, the node B, the eNB, the base transceiver station, the MMR-BS, and the like.

A method of determining a hysteresis range according to an exemplary embodiment of the present invention, a handover triggering method using the method, and a mobile station for performing the method will be described in detail below with reference to drawings.

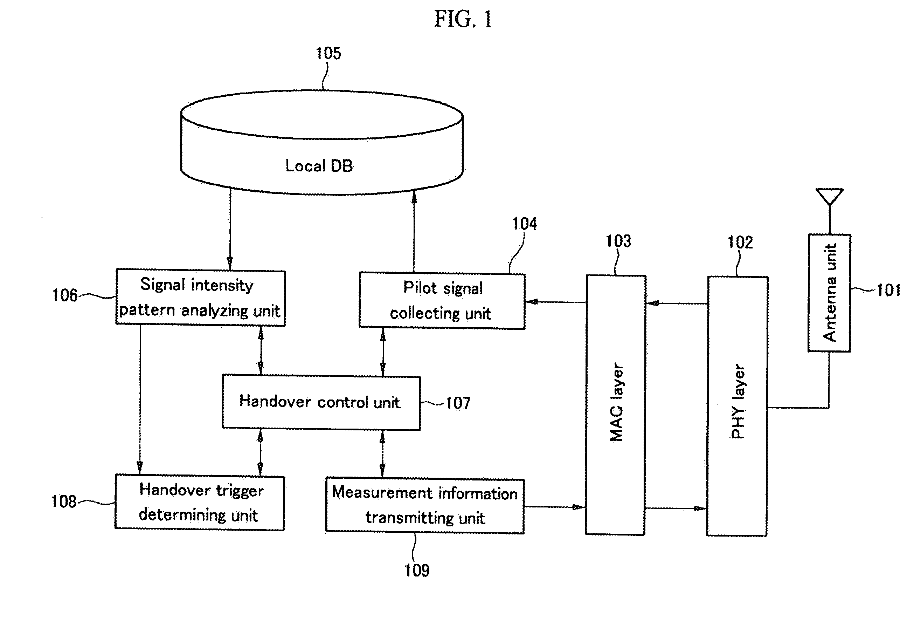

FIG. 1 is a diagram showing the configuration of a mobile station according to an exemplary embodiment of the present invention.

Referring to FIG. 1, a mobile station according an exemplary embodiment of the present invention includes an antenna unit 101, a physical (PHY) layer 102, a media access control (MAC) layer 103, a pilot signal collecting unit 104, a local database (DB) 105, a signal intensity pattern analyzing unit 106, a handover control unit 107, a handover trigger determining unit 108, and a measurement information transmitting unit 109.

When the antenna unit 101 receives a signal, the pilot signal collecting unit 104 receives the signal through the PHY layer 102 and the MAC layer 103, Then, the pilot signal collecting unit 104 measures the signal intensity of the received signal. Further, the signal intensity of the received signal measured until the operation of a timer is terminated is stored in the local DB 105. In this case, the signal intensity of the received signal means the signal intensity of a pilot signal included in the received signals. Further, a timer value counted by the timer is as a value corresponding to a collection period where the signal intensities of the received signals used to analyze signal intensity patterns are collected, and the timer value uses a value that is set by the handover control unit 107 using a measurement control message received from a serving cell or a predetermined value that is predetermined at the time of designing a system.

When the operation of the timer is terminated, the signal intensity pattern analyzing unit 106 deduces approximately linearized signal intensities of a serving cell and adjacent cells by using the signals intensities of the signals collected during a timer value, and slopes of the signal intensities using the linearized signal intensities. In this case, the approximately linearized signal intensities are deduced using a least-squares method. Since the least-squares method is well known and can be easily performed by those skilled in the art, a detailed description thereof will be omitted.

The handover trigger determining unit 108 determines hysteresis ranges by using the slopes deduced by the signal intensity pattern analyzing unit 106. Further, the handover trigger determining unit 108 determines an optimum target cell by applying the determined hysteresis ranges to a handover reporting event formula, and judges whether the handover triggering of the target cell is to be performed or not. In this case, the handover trigger determining unit 108 uses a method of determining a relative hysteresis range in order to determine the hysteresis ranges, and the method of determining a relative hysteresis range will be described in detail below.

When handover triggering is determined by the handover trigger determining unit 108, the measurement information transmitting unit 109 adds the information about the target cell to a measurement information message that requests to perform the handover, and then transmits the measurement information message to the MAC layer 103. The measurement information message is transmitted to the serving cell through the PHY layer 102 and the antenna unit 101, and the handover to the target cell is requested.

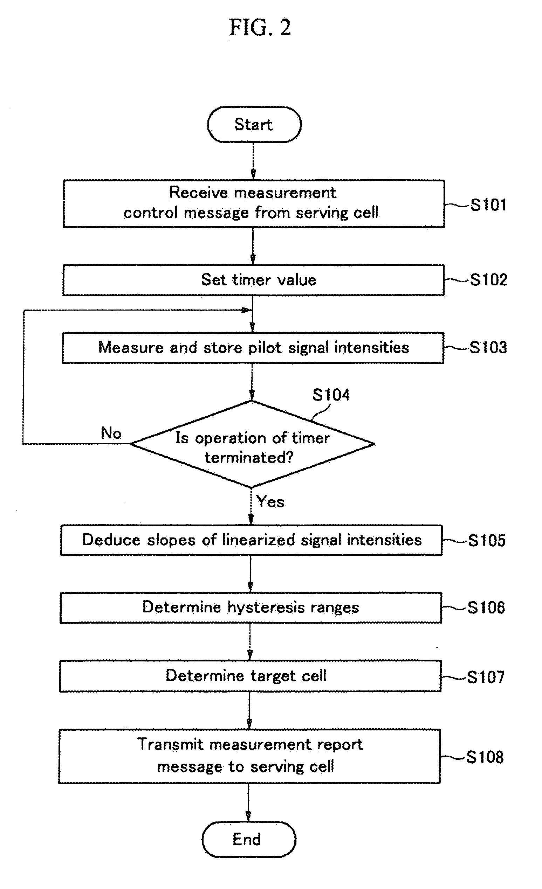

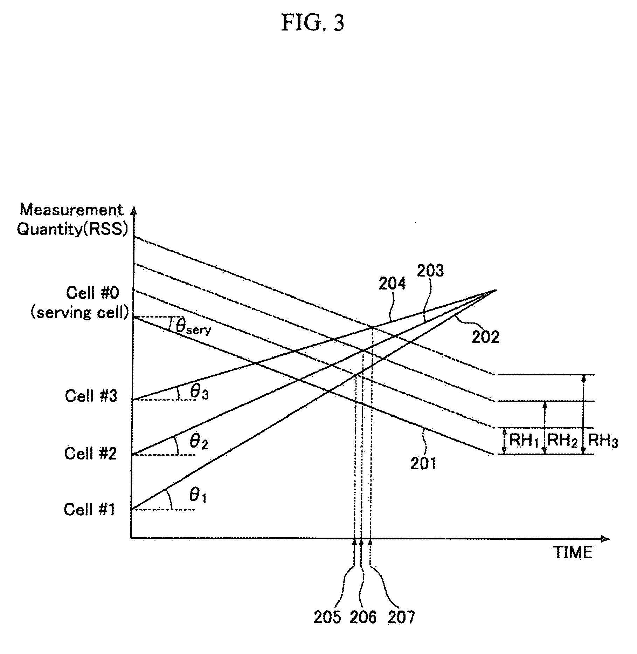

FIG. 2 is a flowchart illustrating a handover triggering method according to an exemplary embodiment of the present invention. Further, FIG. 3 is a view showing an example of a method of determining a relative hysteresis range according to an exemplary embodiment of the present invention, and shows slopes of linearized signal intensities of a serving cell (cell #0) and adjacent cells (celt #1 to cell #3) and hysteresis ranges deduced using the slopes.

Referring to FIG. 2, when receiving a measurement control message from the serving cell (S101), the mobile station sets a timer value of timer corresponding to a collection period where patterns of approximately linearized signal intensities are searched (S102). In this case, the mobile station may set a timer value by using parameters included in the measurement control message, or use a fixed timer value. Meanwhile, if the mobile station uses a fixed timer value, step S102 may be omitted.

When the timer value is set, the mobile station measures signal intensities by using pilot signals included in the signals received until the operation of the timer is terminated. Then, the mobile station stores the measured signals intensities in the local DB 105 (S103).

Subsequently, when the operation of the timer is terminated (S104), the mobile station deduces slopes of the approximately linearized signal intensities corresponding to the serving cell and the adjacent cells on the basis of the signal intensities collected during the collection period by using a least-squares method (S105). Further, the mobile station determines hysteresis ranges corresponding to the respective adjacent cells on the basis of the slopes of the respective adjacent cells (S106).

In this case, the mobile station determines a hysteresis range $RH_n$ corresponding to each of the adjacent cells by using the method of determining a relative hysteresis range, and the method of determining a relative hysteresis range may be represented by the following Equation 3.

### Equation 3

$$RH_n = (H_{Max} - H_{Min}) \cdot \left( \frac{1 - \tanh\left((\theta_n - \theta_{Serv})/w\right)}{2} \right) + H_{Min}$$

Here, $H_{Max}$ indicates the maximum value of a hysteresis range, $H_{Min}$ indicates the minimum value of a hysteresis range, $\theta_{serv}$ indicates the slope (an angle represented by radians) of the approximately linearized signal intensity corresponding to the serving cell, $\theta_n$ indicates the slope (an angle represented by radians) of the approximately linearized signal intensity corresponding to n-th adjacent cell, and w indicates a weight value parameter used to determine an influence of a difference between the slopes of the adjacent cell and the serving cell on a hysteresis range, and may have a value of 1 or more.

Referring to Equation 3, a relative hysteresis range $RH_n$ is determined in the range between $H_{Max}$ and $H_{Min}$, and is calculated by applying a hyperbolic tangent to the difference $(\theta_n - \theta_{Serv})$ between the slopes of the signal intensities of the adjacent cell and the serving cell. Accordingly, a hysteresis range applied to each of the adjacent cells is determined from the difference $(\theta_n - \theta_{Serv})$ between the slopes of the signal intensities of the adjacent cell and the serving cell. Further, a hysteresis range, which corresponds to an adjacent cell having a large difference $(\theta_n - \theta_{Serv})$ between the slopes of the signal intensities of the adjacent cell and the serving cell, that is, an adjacent cell of which signal intensity is significantly increased, which is an adjacent cell of which signal quality is expected to be most quickly improved, is set to be relatively small.

For example, in FIG. 3, the difference between the slope $\theta_1$ of the signal intensity 202 of the cell #1 and the slope $\theta_{Serv}$ of the signal intensity 201 of the serving cell (cell #0) is larger than the difference between the slope $\theta_2$ of the signals intensity 203 of the cell #2 and the slope $\theta_3$ of the signal intensity 204 of the cell #3 and the slope $\theta_{Serv}$ of the linearized signal intensity of the serving cell (cell #0) ($\theta_1 - \theta_{Serv} > \theta_2 - \theta_{Serv} > \theta_3 - \theta_{Serv}$). Accordingly, a hysteresis range $RH_1$ corresponding to the cell #1 is calculated to be smaller than hysteresis ranges $RH_2$ and $RH_3$ corresponding to the cell #2 and the cell #3 ($RH_1 > RH_2 > RH_3$).

Meanwhile, in the above Equation 3, the weight value w is an important parameter that is used to determine a fluctuation band of the hysteresis range $RH_n$ corresponding to the difference ($\theta_n - \theta_{Serv}$) between the slopes of the adjacent cell and the serving cell. For example, if the weight value w is 1, the signal intensity slope($\theta_n$) of the n-th adjacent cell is $-\dfrac{\pi}{2}$, and the signal intensity slope $\theta_{Serv}$ of the serving cell is $\dfrac{\pi}{2}$, the difference ($\theta_n - \theta_{Serv}$) there between is $\Pi$. Therefore, the relative hysteresis range $RH_n$ becomes $H_{Max}$. If the signal intensity slope $\theta_n$ of the n-th adjacent cell is $\dfrac{\pi}{2}$ and the signal intensity slope $\theta_{Serv}$ of the serving cell is $-\dfrac{\pi}{2}$, the difference ($\theta_n - \theta_{Serv}$) therebetween is $-\Pi$. Therefore, the relative hysteresis range $RH_n$ becomes $H_{Min}$. In contrast, if the weight value w is larger than 1, the signal intensity slope $\theta_n$ of the n-th adjacent cell is $-\dfrac{\pi}{2}$, and the signal intensity slope $\theta_{Serv}$ of the serving cell is $\dfrac{\pi}{2}$, the relative hysteresis range $RH_n$ is smaller than $H_{Max}$. If the slope $\theta_n$ of the n-th adjacent cell is $\dfrac{\pi}{2}$ and the slope $\theta_{Serv}$ of the serving cell is $-\dfrac{\pi}{2}$, the relative hysteresis range $RH_n$ is larger than $H_{Min}$.

Accordingly, the weight value w used to determine the relative hysteresis range is set corresponding to an actual wireless environment so as to represent an optimum value of the relative hysteresis range $RH_n$ corresponding to the difference ($\theta_n - \theta_{Serv}$) between the slopes of the signal intensities of the adjacent cell and the serving cell.

When the hysteresis range corresponding to each of the adjacent cells is determined, the mobile station determines an optimum target cell by applying the determined hysteresis ranges to the handover reporting event formula, and judges whether the handover triggering of the target cell is to be performed or not (S107). Further, when the handover triggering is determined, the mobile station transmits a measurement report message including information about the target cell to the serving cell in order to request handover, thereby performing handover triggering (S108).

In this case, the mobile station uses a handover reporting event formula in order to determine handover triggering, and the handover reporting event formula may be represented by the following Equation 4.

## Equation 4

$$RSS_{Serv} < RSS_n - RH_n$$

Here, $RSS_{Serv}$ indicates the current signal intensity of the serving cell, and $RSS_n$ indicates the current signal intensity of the n-th adjacent cell, Further, $RH_n$ indicates a hysteresis range corresponding to the n-th adjacent cell, and may be deduced by the method of determining a relative hysteresis range as in Equation 3.

According to Equation 4, when the current signal intensity $RSS_n$ of the n-th adjacent cell is higher than the current signal intensity $RSS_{Serv}$ of the serving cell by the relative hysteresis range $RH_n$ or more, handover triggering is performed. Accordingly, the mobile station is apt to determine a cell having a small hysteresis range as a target cell. That is, the mobile station is apt to perform handover to a cell of which signal quality is expected to be most quickly improved.

For example, in FIG. 3, handover triggering caused by the handover reporting event formula occurs at a point of 205 in the case of the cell #1, at a point of 206 in the case of the cell #2, and at a point of 207 in the case of the cell #3. As a result, the mobile station is apt to perform handover to the cell #1 of which slope of the signal intensity is most rapidly increased.

When the hysteresis ranges are determined using the slopes of the linearized signal intensities of the adjacent cells as described above, the mobile station is apt to perform handover to a cell of which signal quality is most rapidly increased among the adjacent cells. Therefore, the probability that the mobile station performs handover to the other cell is decreased. As a result, it is possible to obtain an advantage of reducing unnecessary handover.

The above-mentioned exemplary embodiments of the present invention are not only embodied by a method and apparatus. Alternatively, the above-mentioned exemplary embodiments may be embodied by a program performing functions that correspond to the configuration of the exemplary embodiments of the present invention, or a recording medium on which the program is recorded. These embodiments can be easily devised from the description of the above-mentioned exemplary embodiments by those skilled in the art to which the present invention pertains.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims,

An embodiment of the present invention may be summarized as providing a mobile station that deduces a slope of a linearized signal intensity corresponding to each of a serving cell and adjacent cells by using signal intensities collected during a predetermined period, and determines a hysteresis range corresponding to each of the adjacent cells by using the deduced slopes of the signal intensities. Further, the mobile station determines whether handover triggering is to be performed or not by applying the determined hysteresis range to a handover reporting event formula, and thus determines a target cell.

## Claims

1. A method of determining a hysteresis range ($RH_1$, $RH_2$, $RH_3$) of a mobile station for performing handover triggering, the method comprising:

   obtaining signal intensities of signals (201, 202, 203, 204) that are received from a serving cell (Cell #0) and adjacent cells (Cell #1, #2, #3) during a collection period (steps S101, S102, S103);
   **characterized by**:

   deducing a slope ($\theta_{serv}$, $\theta_1$, $\theta_2$, $\theta_3$) of linearized signal intensity (201, 202, 203, 204) of each of the serving cell (Cell #0) and the adjacent cells (Cell #1, #2, #3) by using the signal intensities (step S105); and determining hysteresis ranges ($RH_1$, $RH_2$, $RH_3$) corresponding to the adjacent cells (Cell #1, #2, #3) by using the slope ($\theta_{serv}$, $\theta_3$) (step S106).

2. The method of claim 1, further comprising
   setting a timer value of a timer corresponding to the collection period (S102),
   wherein the obtaining of the signal intensities obtains the signal intensities of signals received until the operation of the timer is terminated (S103, S104).

3. The method of claim 2, further comprising
   receiving a measurement control message from the serving cell (Cell #0) (S101),
   wherein the timer value is set using at least one parameter included in the measurement control message.

4. The method of claims 1 to 3, wherein the determining of the hysteresis ranges determines the hysteresis ranges ($RH_1$, $RH_2$, $RH_3$) corresponding to the adjacent cells (Cell #1, #2, #3) using the difference ($\theta_n - \theta_{serv}$) between the slopes ($\theta_n$) corresponding to the adjacent cells (Cell #n) and the slope ($\theta_{serv}$) corresponding to the serving cell (Cell #0).

5. The method of claim 4, wherein the hysteresis range ($RH_n$) becomes larger as the slope ($\theta_n$) of the adjacent cell (Cell #n) is larger.

6. A handover triggering method of a mobile station, comprising:

obtaining signal intensities (201, 202, 203, 204) of signals that are received from a plurality of cells comprising a serving cell (Cell #0) and at least one adjacent cell (Cell #1, #2, #3) during a collection period (steps S101, S102, S103);
**characterized by**:

deducing a slope ($\theta_{serv}$, $\theta_1$, $\theta_2$, $\theta_3$) of linearized signal intensity (201, 202, 203, 204) of each of the plurality of cells (Cell #0, #1, #2, #3) by using the signal intensities (step S105);
determining at least one hysteresis range ($RH_n$) corresponding to the at least one adjacent cell (Cell #n) by using the difference ($\theta_n - \theta_{serv}$) between the slope ($\theta_n$) corresponding to the at least one adjacent cell and the slope ($\theta_{serv}$) corresponding to the serving cell (Cell #0) (step S106);
determining whether the handover triggering is to be performed or not by using the hysteresis range ($RH_n$) (step 107); and
transmitting a message, which comprises information about a target cell to be an object of handover, to the serving cell (Cell #0) when the handover triggering is determined (step 108).

7. The handover triggering method of claim 6, wherein the determining of the hysteresis range determines the hysteresis range ($RH_n$) by applying a hyperbolic tangent to the difference ($\theta_n - \theta_{serv}$) between the slope ($\theta_n$) corresponding to the at least one adjacent cell (Cell #n) and the slope ($\theta_{serv}$) corresponding to the serving cell (Cell #0).

8. The handover triggering method of claim 6 or 7, wherein the determining of whether the handover triggering is to be performed or not determines the handover triggering when at least one current signal intensity among the current signal intensities (202, 203, 204) corresponding to the at least one adjacent cell (Cell #n) is higher than the current signal intensity (201) of the serving cell (Cell #0) by a corresponding hysteresis range ($RH_n$) or more.

9. A mobile station comprising:

a signal collecting unit (104) adapted to obtain signal intensities of signals that are received from a plurality of cells comprising a serving cell (Cell #0) and at least one adjacent cell (Cell #n) during a collection period;
**characterized by**:

a signal intensity pattern analyzing unit (106) adapted to deduce approximately linearized signal intensities (201, 202, 203, 204) of the plurality of cells and the slopes ($\theta_{serv}$, $\theta_n$) of the approximately linearized signal intensities (201, 202, 203, 204) by using the signal intensities obtained during the collection period; and
a handover triggering determining unit (108) adapted to determine at least one hysteresis range ($RH_n$) corresponding to the at least one adjacent cell (Cell #n) by using the slopes ($\theta_{serv}$, $\theta_n$), select a target cell by using the at least one hysteresis range ($RH_n$), and determine whether the handover triggering is to be performed or not.

**Patentansprüche**

1. Verfahren zum Bestimmen eines Hysteresebereichs ($RH_1$, $RH_2$, $RH_3$) einer Mobilstation zur Durchführung einer Handover-Auslösung, wobei das Verfahren umfasst:

Einholen von Signalintensitäten von Signalen (201, 202, 203, 204), welche von einer bedienenden Zelle (Zelle #0) und benachbarten Zellen (Zelle #1, #2, #3) während einer Erfassungsperiode empfangen werden (Schritte S1101, S102, S103); **gekennzeichnet durch**:
Ableiten eines Anstiegs ($\Theta_{serv}$, $\Theta_1$, $\Theta_2$, $\Theta_3$) der linearisierten Signalintensität (201, 202, 203, 204) von der bedienenden Zelle (Zelle #0) und den benachbarten Zellen (Zelle #1, #2, #3) mittels der Signalintensitäten (Schritt S105); und
Bestimmen von Hysteresebereichen ($RH_1$, $RH_2$, $RH_3$), welche den benachbarten Zellen (Zelle #1, #2, #3) entsprechen, mittels des Anstiegs ($\Theta_{serv}$, $\Theta_1$, $\Theta_2$, $\Theta_3$) (Schritt S106).

2. Verfahren nach Anspruch 1, ferner umfassend
Einstellen eines Zeitgeberwertes von einem Zeitgeber (S102), welcher der Erfassungsperiode (S102) entspricht, wobei das Einholen der Signalintensitäten die Signalintensitäten von Signalen einholt, welche empfangen werden, bis der Betrieb des Zeitgebers beendet ist (S103, S104).

**3.** Verfahren nach Anspruch 2, ferner umfassend

Empfangen einer Messungssteuernachricht von der bedienenden Zelle (Zelle #0) (S101),

wobei der Zeitgeberwert unter Verwendung von wenigstens einem Parameter eingestellt wird, der in der Messungssteuernachricht enthalten ist.

**4.** Verfahren nach den Ansprüchen 1 bis 3, wobei das Bestimmen von den Hysteresebereichen die Hysteresebereiche ($RH_1$, $RH_2$, $RH_3$), welche den benachbarten Zellen (Zelle #1, #2, #3) entsprechen, mittels der Differenz ($\Theta_n - \Theta_{serv}$) zwischen den Anstiegen ($\Theta_n$), welche den benachbarten Zellen (Zelle #n) entsprechen, und den Anstieg ($\Theta_{serv}$) bestimmt, welcher der bedienenden Zelle (Zelle #0) entspricht.

**5.** Verfahren nach Anspruch 4, wobei der Hysteresebereich ($RH_n$) größer wird, wenn der Anstieg ($\Theta_n$) der benachbarten Zelle (Zelle #n) größer ist.

**6.** Handover-Auslöseverfahren von einer Mobilstation, umfassend:

Einholen von Signalintensitäten (201, 202, 203, 204) von Signalen, welche von einer Mehrzahl von Zellen, umfassend eine bedienende Zelle (Zelle #0) und wenigstens eine benachbarte Zelle (Zelle #1, #2, #3), während einer Erfassungsperiode empfangen werden (Schritte S101, S102, S103);

**gekennzeichnet durch**:

Ableiten eines Anstiegs ($\Theta_{serv}$, $\Theta_1$, $\Theta_2$, $\Theta_3$) der linearisierten Signalintensität (201, 202, 203, 204) von jeder der Mehrzahl von Zellen (Zelle #0, #1, #2, #3) unter Verwendung der Signalintensitäten (Schritt S105);

Bestimmen von wenigstens einem Hysteresebereich ($RH_n$), welcher der wenigstens einen benachbarten Zelle (Zelle #n) entspricht, mittels der Differenz ($\Theta_n - \Theta_{serv}$) zwischen dem Anstieg ($\Theta_n$), welcher der wenigstens einen benachbarten Zelle entspricht, und dem Anstieg ($\Theta_{serv}$), welcher der bedienenden Zelle (#0) entspricht (Schritt S106);

Bestimmen, ob die Handover-Auslösung durchzuführen ist oder nicht, mittels des Hysteresebereichs ($RH_n$) (Schritt 107); und

Übertragen einer Nachricht, welche Information über eine Zielzelle umfasst, die ein Ziel des Handovers ist, an die bedienende Zelle (Zelle #0), wenn die Handover-Auslösung bestimmt wird (Schritt 108).

**7.** Handover-Auslöseverfahren nach Anspruch 6, wobei das Bestimmen des Hysteresebereichs den Hysteresebereich ($RH_n$) durch Anwenden eines hyperbolischen Tangens auf die Differenz ($\Theta_n - \Theta_{serv}$) zwischen dem Anstieg ($\Theta_n$), welche der wenigstens einen benachbarten Zelle (Zelle #n) entspricht, und dem Anstieg ($\Theta_{serv}$) bestimmt, welcher der bedienenden Zelle (Zelle #0) entspricht.

**8.** Handover-Auslöseverfahren nach Anspruch 6 oder 7, wobei das Bestimmen, ob die Handover-Auslösung durchzuführen ist oder nicht, die Handover-Auslösung durch einen entsprechenden Hysteresebereich ($RH_n$) oder mehr bestimmt, wenn wenigstens eine gegenwärtige Signalintensität von den gegenwärtigen Signalintensitäten (202, 203, 204), welche der wenigstens einen benachbarten Zelle (Zelle #n) entsprechen, größer als die gegenwärtige Signalintensität (201) von der bedienenden Zelle (Zelle #0) ist.

**9.** Mobilstation, umfassend:

eine Signalerfassungseinheit (104), die dazu ausgelegt ist, Signalintensitäten von Signalen einzuholen, welche von einer Mehrzahl von Zellen, umfassend eine bedienende Zelle (Zelle #0) und wenigstens eine benachbarte Zelle (Zelle #n), während einer Erfassungsperiode empfangen werden; **gekennzeichnet durch**:

eine Signalintensitätsmusteranalysiereinheit (106), die dazu ausgelegt ist, annähernd linearisierte Signalintensitäten (201, 202, 203, 204) von der Mehrzahl von Zellen und die Anstiege ($\Theta_{serv}$, $\Theta_n$) der annähernd linearisierten Signalintensitäten (201, 202, 203, 204) mittels der Signalintensitäten abzuleiten, welche während der Erfassungsperiode eingeholt werden; und

eine Handover-Auslösebestimmungseinheit (108), die dazu ausgelegt ist, wenigstens einen Hysteresebereich ($RH_n$), welche der wenigstens einen benachbarten Zelle (Zelle #n) entspricht, mittels der Anstiege ($\Theta_{serv}$, $\Theta_n$) zu bestimmen, eine Zielzelle mittels des wenigstens einen Hysteresebereichs ($RH_n$) auszuwählen und zu bestimmen, ob die Handover-Auslösung durchzuführen ist oder nicht.

**Revendications**

1. Procédé de détermination d'une plage d'hystérésis ($RH_1$, $RH_2$, $RH_3$) d'une station mobile pour effectuer un déclenchement de transfert intercellulaire, le procédé consistant à :

   obtenir les intensités de signal de signaux (201, 202, 203, 204) qui sont reçus d'une cellule desservante (Cell #0) et de cellules adjacentes (Cell #1, #2, #3) pendant une période de collecte (étapes S101, S102, S103) ; **caractérisé en ce qu'**il consiste à :

   déduire une pente ($\theta_{serv}$, $\theta_1$, $\theta_2$, $\theta_3$) d'intensité de signal (201, 202, 203, 204) linéarisée de chacune de la cellule desservante (Cell #0) et des cellules adjacentes (Cell #1, #2, #3) en utilisant les intensités de signal (étape S105) ; et
   déterminer des plages d'hystérésis ($RH_1$, $RH_2$, $RH_3$) correspondant aux cellules adjacentes (Cell #1, #2, #3) en utilisant la pente ($\theta_{serv}$, $\theta_1$, $\theta_2$, $\theta_3$) (étape S106).

2. Procédé selon la revendication 1, comprenant en outre :

   fixer une valeur de registre d'horloge d'un registre d'horloge correspondant à la période de collecte (S102), dans lequel l'obtention des intensités de signal obtient les intensités de signal de signaux reçus jusqu'à ce que le fonctionnement du registre d'horloge soit terminé (S103, S104).

3. Procédé selon la revendication 2, comprenant en outre :

   recevoir un message de commande de mesure de la cellule desservante (Cell #0) (S101), dans lequel la valeur de registre d'horloge est fixée en utilisant au moins un paramètre inclus dans le message de commande de mesure.

4. Procédé selon les revendications 1 à 3, dans lequel la détermination des plages d'hystérésis détermine les plages d'hystérésis ($RH_1$, $RH_2$, $RH_3$) correspondant aux cellules adjacentes (Cell #1, #2, #3) en utilisant la différence ($\theta_n - \theta_{serv}$) entre les pentes ($\theta_n$) correspondant aux cellules adjacentes (Cell #n) et la pente ($\theta_{serv}$) correspondant à la cellule desservante (Cell #0).

5. Procédé selon la revendication 4, dans lequel la plage d'hystérésis ($RH_n$) devient plus grande alors que la pente ($\theta_n$) de la cellule adjacente (Cell #n) est plus grande.

6. Procédé de déclenchement de transfert intercellulaire d'une station mobile, comprenant :

   obtenir des intensités de signal (201, 202, 203, 204) de signaux qui sont reçus d'une pluralité de cellules comprenant une cellule desservante (Cell #0) et au moins une cellule adjacente (Cell #1, #2, #3) pendant une période de collecte (étapes S101, S102, S103) ; **caractérisé en ce qu'**il comprend :

   déduire une pente ($\theta_{serv}$, $\theta_1$, $\theta_2$, $\theta_3$) d'intensité de signal (201, 202, 203, 204) linéarisée de chacune de la pluralité de cellules (Cell #0, #1, #2, #3) en utilisant les intensités de signal (étape S105) ;
   déterminer au moins une plage d'hystérésis ($RH_n$) correspondant à ladite au moins une cellule adjacente (Cell #n) en utilisant la différence ($\theta_n - \theta_{serv}$) entre la pente ($\theta_n$) correspondant à ladite au moins une cellule adjacente et la pente ($\theta_{serv}$) correspondant à la cellule desservante (Cell #0) (étape S106) ;
   déterminer si le déclenchement de transfert intercellulaire doit être effectué ou non en utilisant la plage d'hystérésis ($RH_n$) (étape 107) ; et
   transmettre un message, qui comprend des informations concernant une cellule cible devant être un objet de transfert intercellulaire, à la cellule desservante (Cell #0) lorsque le déclenchement de transfert intercellulaire est déterminé (étape 108).

7. Procédé de déclenchement de transfert intercellulaire selon la revendication 6, dans lequel la détermination de la plage d'hystérésis détermine la plage d'hystérésis ($RH_n$) en appliquant une tangente hyperbolique à la différence ($\theta_n - \theta_{serv}$) entre la pente ($\theta_n$) correspondant à ladite au moins une cellule adjacente (Cell #n) et la pente ($\theta_{serv}$) correspondant à la cellule desservante (Cell #0).

8. Procédé de déclenchement de transfert intercellulaire selon la revendication 6 ou 7, dans lequel la détermination du fait que le déclenchement de transfert intercellulaire doit être effectué ou non détermine le déclenchement intercellulaire lorsqu'au moins une intensité de signal actuelle parmi les intensités de signal actuelles (202, 203, 204) correspondant à ladite au moins une cellule adjacente (Cell #n) est supérieure à l'intensité de signal actuelle (201) de la cellule desservante (Cell #0) d'une plage d'hystérésis ($RH_n$) correspondante ou plus.

9. Station mobile comprenant :

une unité de collecte de signal (104) adaptée pour obtenir les intensités de signal de signaux qui sont reçus d'une pluralité de cellules comprenant une cellule desservante (Cell #0) et au moins une cellule adjacente (Cell #n) pendant une période de collecte ;
**caractérisée par** :

une unité d'analyse de motif d'intensité de signal (106) adaptée pour déduire les intensités de signal (201, 202, 203, 204) à peu près linéarisées de la pluralité de cellules et les pentes ($\theta_{serv}$, $\theta_n$) des intensités de signal (201, 202, 203, 204) à peu près linéarisées en utilisant les intensités de signal obtenues pendant la période de collecte ; et
une unité de détermination de déclenchement de transfert intercellulaire (108) adaptée pour déterminer au moins une plage d'hystérésis ($RH_n$) correspondant à ladite au moins une cellule adjacente (Cell #n) en utilisant les pentes ($\theta_{serv}$, $\theta_n$), sélectionner une cellule cible en utilisant ladite au moins une plage d'hystérésis ($RH_n$) et déterminer si le déclenchement de transfert intercellulaire doit être effectué ou non.

FIG. 1

# FIG. 2

```
            ( Start )
                │
                ▼
┌───────────────────────────────┐
│    Receive measurement        │── S101
│  control message from serving cell │
└───────────────────────────────┘
                │
                ▼
┌───────────────────────────────┐
│       Set timer value         │── S102
└───────────────────────────────┘
                │
                ▼
┌───────────────────────────────┐
│ Measure and store pilot signal intensities │── S103
└───────────────────────────────┘
                │
                ▼           S104
           ◇─────────────◇
    No     Is operation of timer
  ◁────────   terminated?
           ◇─────────────◇
                │ Yes
                ▼
┌───────────────────────────────┐
│ Deduce slopes of linearized signal intensities │── S105
└───────────────────────────────┘
                │
                ▼
┌───────────────────────────────┐
│    Determine hysteresis ranges │── S106
└───────────────────────────────┘
                │
                ▼
┌───────────────────────────────┐
│      Determine target cell    │── S107
└───────────────────────────────┘
                │
                ▼
┌───────────────────────────────┐
│   Transmit measurement report │── S108
│    message to serving cell    │
└───────────────────────────────┘
                │
                ▼
            ( End )
```

# FIG. 3

**REFERENCES CITED IN THE DESCRIPTION**

**Patent documents cited in the description**

- US 200410267928 A